Europäisches Patentamt

(19) **European Patent Office**

Office européen des brevets

(11) Numéro de publication: **0 015 803**
**B1**

(12) **FASCICULE DE BREVET EUROPEEN**

(45) Date de publication du fascicule du brevet: **22.12.82**

(51) Int. Cl.³: **B 62 M 3/08, A 43 B 5/14**

(21) Numéro de dépôt: **80400232.7**

(22) Date de dépôt: **19.02.80**

(54) Dispositif d'accouplement de sécurité entre une pédale de cycle et la chaussure du cycliste.

(30) Priorité: **21.02.79 FR 7904413**

(43) Date de publication de la demande:
**17.09.80 Bulletin 80/19**

(45) Mention de la délivrance du brevet:
**22.12.82 Bulletin 82/51**

(84) Etats contractants désignés:
**AT BE CH DE GB IT LU NL SE**

(56) Documents cités:
**FR - A - 1 030 485**
**FR - A - 2 279 607**
**FR - A - 2 315 875**
**US - A - 3 964 343**

(73) Titulaire: **Lotteau, Jacques**
**22 rue de Breteuil**
**F-78670 Villennes/Seine (FR)**

(73) Titulaire: **Bruker, Jacques**
**13 rue Boileau**
**F75016 Paris (FR)**

(73) Titulaire: **Freche, Charles**
**9 rue Villebois-Mareuil**
**F-75017 Paris (FR)**

(72) Inventeur: **Lotteau, Jacques**
**22 rue de Breteuil**
**F-78670 Villennes/Seine (FR)**
Inventeur: **Bruker, Jacques**
**13 rue Boileau**
**F75016 Paris (FR)**
Inventeur: **Freche, Charles**
**9 rue Villebois-Mareuil**
**F-75017 Paris (FR)**

(74) Mandataire: **Wagret, Jean-Michel**
**Propi Conseils 23 rue de Léningrad**
**F-75008 Paris (FR)**

Courier Press, Leamington Spa, England.

Dispositif d'accouplement de sécurité entre une pédale de cycle et la
chaussure du cycliste

La présente invention concerne un dispositif en vue de permettre un accouplement de sécurité respectivement entre la pédale d'un cycle et de la chaussure portée par le cycliste.

On a cherché à solidariser le pied du cycliste sur la pédale pour permettre le travail de la jambe non seulement à la poussée mais également à la traction.

On connaît ainsi les cale-pieds traditionnels qui sanglent le pied sur la pédale, mais entravent quelque peu la circulation sanguine et sont un risque permanent d'accident, en cas de chute, le cycliste n'ayant que rarement la possibilité de se dégager à temps. En outre, les cale-pieds ne permettent pas la légère rotation horizontale du pied sur la pédale, que de nombreux cyclistes pratiquent naturellement (rotation physiologique).

On a cherché à réaliser d'autres dispositifs de fixation amovibles permettant le dégagement plus rapide du pied; on connaît ainsi un dispositif d'engagement à cliquet selon le brevet français N° 2 315 875; le cliquet monté sur la semelle vient s'engager en rotation dans un logement récepteur monté sur la pédale; mais ce dispositif présente de nouveaux inconvénients; en effet, le cliquet formant saillie sous la chaussure entraîne une usure des pièces et une gêne pour l'utilisateur lors de la marche; la fixation du cliquet sur la semelle pose des problèmes délicats tandis que le dispositif nécessite une pédale spéciale montée sur le cycle, sans permettre un réglage adapté à la morphologie du cycliste.

La présente invention vise à remédier à ces inconvénients et permettra de réaliser un dispositif aboutissant au résultat technique souhaité tout en évitant les inconvénients cités ci-dessus.

A cet effet, l'invention concerne un dispositif d'accouplement de sécurité entre une pédale de cycle et la chaussure portée par le cycliste en vue d'assurer, premièrement la manoeuvre de la pédale à la traction par le pied du cycliste, deuxièmement le dégagement instantané du pied en cas d'accident de parcours, et troisièmement la possibilité d'effectuer une rotation horizontale (physiologique) du pied sans désaccoupler la pédale de la chaussure. Le dispositif selon l'invention est constitué de deux organes à emboîtement mutuel respectivement mâle et femelle et montés solidairement l'un sur la pédale et l'autre sur la chaussure, ces organes à emboîtement étant munis de moyens de verrouillage aptes à être mis en oeuvre par simple déplacement respectif de la chaussure par rapport à la pédale, et est caractérisé en ce que la pièce mâle est en forme de noyau cylindrique et est disposée sur la pédale, et en ce que la pièce femelle est constituée par un palier de forme complémentaire récepteur dudit noyau et est disposée dans l'épaisseur de la semelle de la chaussure.

De préférence, les dispositifs de verrouillage sont du type à baïonnette et ils sont formés d'une pluralité de pênes débordant radialement et disposés sur l'un des organes à emboîtement, les pênes coopérant avec des logements récepteurs disposés sur l'autre organe en permettant, de façon connue en soi, l'engagement des pênes par un mouvement axial selon l'axe du noyau cylindrique, suivi d'un verrouillage par rotation (pour la manoeuvre d'accouplement), et en permettant inversement le déverrouillage par rotation suivi d'un dégagement axial (pour la manoeuvre de désaccouplement).

La disposition selon laquelle le noyau est disposé sur la pédale, et le palier récepteur du noyau est disposé dans l'épaisseur de la semelle de la chaussure, ne provoque, lorsque le cycliste descend de sa machine, ni usure, ni gêne car aucune pièce ne forme saillie avec le plan de la semelle.

D'autre part, si l'utilisateur ne désire pas accrocher sa chaussure à la pédale, il lui suffit de retourner la pédale et de prendre ainsi appui sur l'autre face de la pédale.

D'autres caractéristiques et avantages de l'invention ressortiront de la description qui suit et qui est donnée en rapport avec une forme de réalisation particulière présentée à titre d'exemple non limitatif et en se référant aux dessins annexés.

La figure 1 représente une vue en perspective d'une pédale munie du dispositif d'emboîtement selon l'invention associée à une chaussure munie de l'organe complémentaire.

La figure 2 représente une vue en coupe longitudinale (par rapport au pied) et transversale (par rapport à la pédale) du dispositif d'accouplement en position désaccouplée.

La figure 3 représente les mêmes éléments en position d'accouplement.

La figure 4 représente une vue éclatée d'une forme de réalisation du noyau d'accouplement et de la plaquette en forme de U supportant le noyau.

La figure 5 représente une vue en élévation latérale du noyau en position d'assemblage des divers éléments représentés en position éclatée sur la figure précédente.

La figure 6 représente une vue de dessus des deux pièces constituées du noyau, avant assemblage.

La figure 7 représente le noyau vu de dessus après assemblage de deux pièces.

Selon l'ensemble des figures on voit que le dispositif associe une chaussure 1, qui est de préférence une chaussure de cycliste de type classique et une pédale 2 également classique montée sur son axe 3.

L'invention prévoit un dispositif d'accouplement comportant un noyau cylindrique mâle 4 apte à s'emboîter dans son palier récepteur 5, avec un léger jeu pour permettre sans friction notable le mouvement réciproque des deux organes.

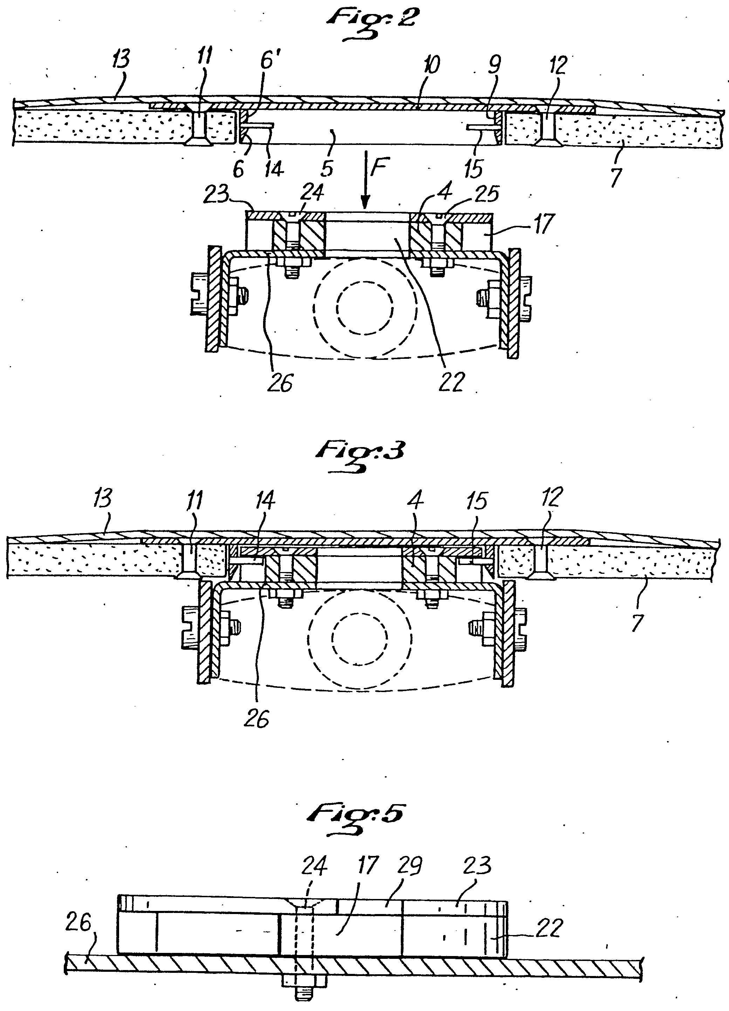

Dans un premier temps le noyau 4 est engagé à l'intérieur du palier dans un mouvement axial (selon la flèche F représentée à la figure 2).

Le palier est ici constitué d'un corps sensiblement cylindrique 9, apte à recevoir le noyau 4 et ce corps 9 est monté solidaire sur une plaquette support 10. Pour permettre l'introduction aisée du noyau dans le palier, le corps 9 comprend une partie 6 en forme de tronc de cone dont le petit diamètre est égal à celui de la partie cylindrique 6' du corps 9 et dont le grand diamètre est situé à la base du corps 9. La partie cylindrique 6' a un diamètre permettant, avec un léger jeu, l'emboîtement du noyau dans le palier. La partie tronconique 6 permettra plus facilement à l'utilisateur de trouver par autocentrage l'emplacement correct du noyau pour sa pénétration dans le palier.

Le corps 9 de palier est mis en place dans son logement correspondant pratiqué dans l'épaisseur de la semelle 7 tandis que la plaque supérieure 10 repose sur la face intérieure de la semelle, et cette plaque 10 est solidarisée sur la partie de la semelle périphérique au logement récepteur du cylindre 9 par un jeu de rivets 11, 11', 12, 12'.

Une semelle intérieure 13 est rapportée sur la plaquette 10 et assure ainsi la continuité de la surface intérieure de la chaussure, la plaquette étant insensible sous la plante des pieds du cycliste.

Sur la paroi intérieure du corps 9 du palier 5, sont montés les pênes en forme d'oreilles horizontales 14, 14', 15, 15' suivant des directions axiales. Lesdits pênes sont de préférence montés dans la zone de jonction entre la partie cylindrique 6' et la partie tronconique 6.

Ces pênes forment avec les logements récepteurs 16, 16', 17, 17' un ensemble de verrouillage à baïonnette de type connu en soi.

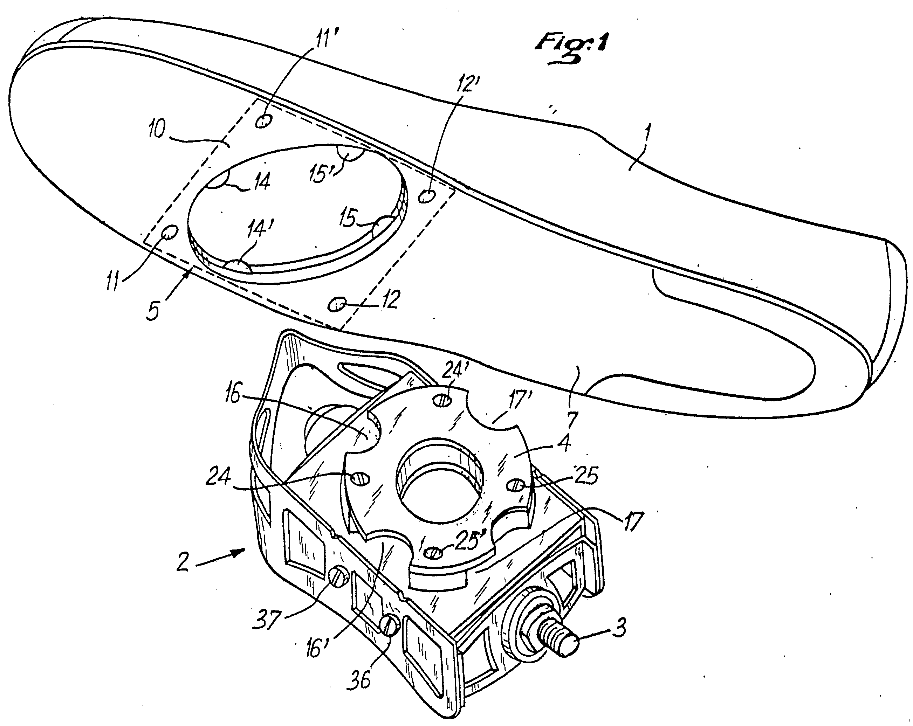

On voit notamment sur la figure 1 et sur la figure 2 que la chaussure est convenablement positionnée sur la pédale de façon à ce que le palier se situe au-dessus du noyau, l'ensemble du noyau pénètre par emboîtement selon la direction de la flèche F (figure 2) c'est-à-dire selon une direction axiale, après quoi la rotation de la chaussure, d'une valeur donnée comprise entre 20° et 35° assure la pénétration des oreilles formant pênes 14 et 14' et 15 et 15' à l'intérieur des logements récepteurs 16, 16', 17, 17'; dans cette position le palier se trouve verrouillé sur le noyau de sorte que la chaussure est ainsi accouplée sur la pédale, tout en permettant la rotation physiologique du pied (suivant un angle d'environ 10°).

Il suffit d'un simple mouvement de rotation du pied suivant un angle compris entre 20 et 35°, pour permettre le désaccouplement de la chaussure par rapport à la pédale et la libération du pied.

Et, selon l'invention, le mouvement de rotation dans la manoeuvre de désaccouplement se fait en écartant le talon vers l'extérieur; ceci correspond bien au réflexe normal du cycliste qui tend à mettre le pied à terre en écartant spontanément le pied vers l'extérieur.

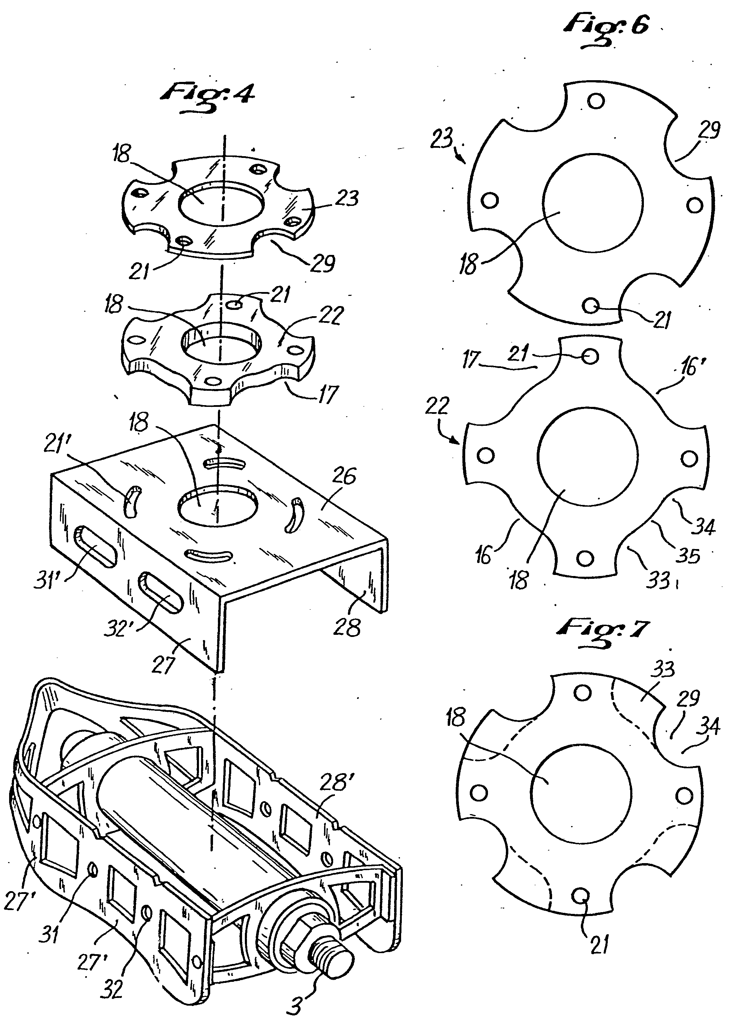

Selon la figure 4, la figure 5 et la figure 6, on voit une forme de réalisation plus particulière du noyau 4 mâle utilisé pour la réalisation de l'invention.

De préférence, le noyau 4 est constitué de deux pièces 22 et 23 cylindriques, superposées, coaxiales et de même diamètre, comportant des lumières 21. Des boulons 24, 24', 25, 25' traversant ces lumières 21 et les boutonnières en arc de cercle 21' pratiquées sur la face supérieure de la plaquette 26 en forme de U renversé pour solidariser les trois pièces; les boutonnières 2 permettent le réglage angulaire du noyau 4 par rapport à la plaquette 26. La pièce 22, appelée corps du noyau est située sous la pièce 23, et comporte des évidements (voir notamment figure 6) régulièrement répartis sur son pourtour, formant les logements 16, 16', 17, 17' récepteurs des pênes 14, 14', 15, 15' du palier. Ces évidements comportent deux parties 33 et 34 en portion de cercle, séparées par un renflement 35. La pièce 23, appelée de renforcement est réalisée en métal de haute résistance mécanique, tel que l'acier, et comporte des évidements semi-circulaires 29 régulièrement répartis sur son pourtour, mais de surface moindre que les évidements pratiqués dans le corps 22 du noyau.

Le corps 22 et la pièce 23 sont superposés ainsi que montré sur la figure 7. On peut voir que la partie 33 d'un logement récepteur 16, 16', 17 ou 17' est recouverte par la pièce de renforcement 23, tandis qu'à la partie 34 du même logement récepteur correspond un évidement 29 de la pièce 23. Lors de l'engagement axial du noyau à l'intérieur du palier, selon la flèche F de la figure 2, les pênes 14, 14,', 15, 15' du palier pénètrent dans les logements récepteurs 16, 16', 17 et 17' au travers des évidements 29; puis, par rotation de la chaussure, les pênes se trouvent dans la partie 33 desdits logements récepteurs et portent alors sur la face inférieure de la pièce de renforcement 23. La pièce 23 aura une épaisseur moindre que la hauteur de la partie cylindrique 6' du palier dans laquelle elle se trouve pour permettre le mouvement des pênes avec un léger jeu. Les pênes, une fois dans la partie 33 des logements récepteurs du noyau, pouvant effectuer un mouvement de rotation alternatif d'une amplitude d'environ 10°, suivant l'axe du noyau, tout en gardant la chaussure accouplée à la pédale; ce mouvement correspondant à la rotation dite physiologique du pied.

D'autre part, le noyau et la plaquette en U peuvent comporter un évidement circulaire central 18 en vue d'alléger le dispositif et d'évacuer des corps étrangers éventuellement logés dans le palier. Le diamètre de cet évidement est tel qu'il concilie les impératifs de légèreté et de résistance mécanique.

Les branches latérales du U constituant les montants verticaux 27, 28 de la plaquette 26 sont emboîtées à l'intérieur de la pédale le long des longerons 27' et 28' de cette dernière.

Des boutonnières 31' et 32' sont prévues sur chaque montant 27 et 28, en regard de lumières 31 et 32 pratiquées sur chaque longeron 27' et 28' de la pédale. Un jeu de boulons 36 et 37 traversant lesdites boutonnières en 31', 32' et lesdites lumières 31 et 32 assure de chaque côté la solidarisation de la pédale à la plaquette. On pourra prévoir inversement les boutonnières sur les longerons et les lumières sur les montants verticaux de la plaquette 26.

Les boutonnières donnent la possibilité de régler la position de la plaquette par rapport aux longerons, c'est-à-dire d'assurer un positionnement correct de la chaussure par rapport aux longerons; on peut ainsi régler et ajuster à la fois en hauteur et transversalement suivant l'axe 3 de la pédale, l'ensemble d'accouplement de façon à ce que, l'accouplement étant réalisé, les longerons 27' et 28' de la pédale viennent porter sous la semelle; on peut ainsi assurer le contact en appui de la chaussure sur ses longerons et procure au cycliste la sensation normale d'appui sur la pédale dont il a l'habitude, et adapter le dispositif à la morphologie de l'utilisateur.

L'ensemble peut être réalisé à partir de pièces amovibles telles que décrites et illustrées par les dessins, de sorte que l'équipement selon l'invention pourra être adapté à partir d'une plaquette 26 montée sur une pédale classique; pareillement la chaussure pourra être adaptée par simple évidement de la semelle à l'endroit convenable permettant la mise en place du palier 5 monté sur la plaquette support 10.

On pourra également concevoir le montage d'une plaquette 26 supportant le noyau 4 sur chaque face de la pédale.

Dans la réalisation selon l'invention on voit que l'effort à la poussée est transmis de façon conventionnelle entre la semelle de la chaussure venant porter (comme rappelé ci-dessus) sur les longerons de la pédale; un contact étant également effectué et obtenu entre le fond horizontal du palier et le plan supérieur du noyau 4.

A la traction lors du mouvement de remontée de la pédale, l'effort s'exerce depuis l'ensemble de la chaussure et la semelle pour soulever la plaque 10 qui repose sur tout le pourtour du logement récepteur du palier 5; les rivets 11, 11' et 12, 12' n'ont qu'une fonction de solidarisation et de maintien en place et n'assurent pas la transmission de l'effort de la traction, cet effort étant réparti sur l'ensemble de l'interface entre la semelle intérieure et la plaquette support 10, ce qui évite tout risque d'arrachement.

Mais le dispositif selon l'invention pourrait être réalisé également à partir d'une pédale comportant d'origine le noyau 4 intégré dans l'ensemble de la monture de cette pédale; le noyau 4 pourrait également être réalisé comme un bloc monopièce par exemple en matière moulée. Le corps du noyau 22 pourrait être en matière plastique, ce dernier comportant les encoches formant gâches de verrouillage décrites, et supportant la plaque de renforcement 23.

La chaussure pourrait également être réalisée d'origine avec le palier et sa plaque support noyé dans la masse de la semelle.

Les différentes pièces composant le noyau, le palier, la plaquette support du noyau sont standards et peuvent être montées sur une pédale gauche ou droite, la différenciation se faisant au moyen de l'assemblage. On obtient ainsi par une standardisation des pièces une facilité de montage et d'échange de pièces.

L'ensemble ainsi réalisé est particulièrement léger et ne représente donc aucun excès de poids; il est au contraire réalisé en matériaux particulièrement légers (alliage léger ou matière de synthèse) et aboutit à un poids inférieur aux dispositifs actuellement connus.

Son efficacité et sa simplicité de mise en oeuvre sont confirmées par l'expérience.

Le dispositif selon l'invention, premièrement assure de façon rapide, simple et efficace, l'accouplement et le désaccouplement de la chaussure du cycliste à la pédale, deuxièmement ne comporte aucun élément formant saillie avec la semelle pouvant gêner l'utilisateur lors d'une marche occasionnelle, troisièmement autorise la rotation dite physiologique du pied en période d'accouplement, quatrièmement est conçu pour permettre le réglage de ses différents éléments constituants les uns par rapport aux autres afin de s'adapter ainsi à la morphologie et aux désidérata de l'utilisateur, et au type de course effectuée, cinquièmement est constitué d'éléments standards, facilement assemblables et réalisables.

**Revendications**

1. Dispositif d'accouplement de sécurité entre une pédale (2) de cycle et la chaussure (1) portée par le cycliste du type constitué de deux organes à emboîtement mutuel respectivement mâle et femelle et montés solidairement l'un sur la pédale (2) et l'autre sur la chaussure (1), ces organes à emboîtement étant munis de moyens de verrouillage aptes à être mis en oeuvre par simple déplacement respectif de la chaussure par rapport à la pédale, caractérisé en ce que la pièce mâle est en forme de noyau cylindrique (4) et est disposée sur la pédale (2) et en ce que la pièce femelle est constituée d'un palier (5) de forme complémentaire dudit noyau (4) et est disposée dans l'épaisseur de la semelle (7) de la chaussure (1).

2. Dispositif selon la revendication 1, caractérisé en ce que le palier (5) de forme complémentaire et récepteur dudit noyau (4), comporte une pluralité de pênes (14, 14', 15, 15') débordant radialement et disposés sur sa paroi intérieure, les pênes coopérant avec des logements récepteurs (16, 16', 17, 17') disposés sur les bords du noyau (4) en permettant, de façon connue en soi, l'engagement des pênes par un mouvement axial selon l'axe du noyau cylindrique, suivi d'un verrouillage par rotation (pour la manoeuvre d'accouplement), et en permettant inversement le déverrouillage par rotation suivi d'un dégagement axial (pour la manoeuvre de désaccouplement).

3. Dispositif selon la revendication 2, caractérisé en ce que le noyau cylindrique (4) est lui-même monté sur une plaquette (26) solidarisée et rapportée de façon amovible sur la pédale (2).

4. Dispositif selon la revendication 3, caractérisé en ce que la plaquette (26) a une section en forme de U renversé, la partie supérieure du U constituant le plan support du noyau (4), les branches (27 et 28) tournées vers le bas du U étant disposées parallèlement et contre les longerons (27', 28') de la pédale et cette plaquette supportant le noyau est réglable par rapport à ses longerons, et à cet effet, les branches du U formant les montants verticaux de la plaquette sont immobilisées par un jeu de boulons (36, 37) sur les longerons de la pédale, les boulons d'immobilisation traversant des boutonnières (31, 31', 32, 32') prévues sur l'un des éléments à assembler en permettant ainsi d'ajuster le positionnement respectif de la plaquette (26) et des longerons (27', 28') de la pédale.

5. Dispositif selon la revendication 4, caractérisé en ce que le noyau (4) est fixé sur la partie supérieure de la plaquette (26) en forme de U renversé par l'intermédiaire d'un jeu de boulons (24, 24', 25, 25') traversant, d'une part ledit noyau, d'autre part ladite partie supérieure de la plaquette, par des boutonnières (21') en arc de cercle en permettant de régler le positionnement angulaire respectif de ladite plaquette (26) et dudit noyau (4).

6. Dispositif selon la revendication 1, caractérisé en ce que le noyau (4) est constitué de deux pièces de forme générale cylindrique superposées, coaxiales et de même diamètre, en ce que la première pièce constituant le corps (22) du noyau comporte des évidements (17) régulièrement répartis sur son pourtour, en ce que la seconde pièce (23) de renforcement, constituée de métal à haute résistance mécanique telle qu'une tôle d'acier, couvre le corps du noyau et comporte également des évidements semi-circulaires (29) régulièrement répartis sur son pourtour, mais de surface moindre que ceux pratiqués dans le corps (22) du noyau, ces évidements formant ensemble les logements 16, 16', 17, 17' récepteurs des pênes (14, 14', 15, 15') disposés sur le palier (5) recevant le noyau (4).

7. Dispositif selon la revendication 1, caractérisé en ce que la paroi intérieure du corps (9) de forme générale cylindrique constituant le palier (5) comporte des pênes (14, 14', 15, 15') disposés en croix et formés d'oreilles en saillie radiale, aptes à pénétrer dans les logements récepteurs (16, 16', 17, 17') pratiqués sur le pourtour du noyau (4).

8. Dispositif selon la revendication 1, caractérisé en ce que le palier (5) constitué d'un corps sensiblement cylindrique (9) est solidaire d'une plaquette (10) débordant à l'extérieur du palier (5), et en ce que ladite plaquette (10) est solidarisée sur la semelle (7) de la chaussure (1) dans la zone entourant ce palier (5).

9. Dispositif selon la revendication 1, caractérisé en ce que le palier récepteur (5) est constitué d'une section cylindrique (6') surmontant une section tronconique (6) coaxiale, la section tronconique (6) ayant sont petit diamètre égal à celui de la section de cylindre (6') et son plus grand diamètre situé à la base dudit palier (5) permettant ainsi de guider la pénétration du noyau (4) dans ledit palier (5), la section de cylindre (6') ayant un diamètre permettant l'emboîtement (avec un léger jeu) du noyau (4).

### Claims

1. Safety coupling device between a cycle pedal (2) and the shoe (1) worn by the cyclist, of the type constituted by two respectively male and female, mutually engaging members mounted fast, one on the pedal (2) and the other on the shoe (1), these engaging members being provided with locking means adapted to be actuated by simple respective displacement of the shoe with respect to the pedal, characterized in that the male piece is in the form of a cylindrical core (4) and is disposed on the pedal (2) and in that the female piece is constituted by a bearing (5) of shape complementary of said core (4) and is disposed in the thickness of the sole (7) of the shoe (1).

2. Device according to Claim 1, characterized in that the bearing (5) of complementary shape and receiving said core (4) comprises a plurality of bolt elements (14, 14', 15, 15') projecting radially and disposed on its inner wall, the bolt elements cooperating with receiver housings (16, 16', 17, 17') disposed on the edges of the core (4) allowing, in manner known per se, the engagement of the bolt elements by an axial movement along the axis of the cylindrical core, followed by a locking by rotation (for the coupling manoeuvre), and inversely allowing unlocking by rotation followed by an axial disengagement (for the disconnecting manoeuvre).

3. Device according to Claim 2, characterized in that the cylindrical core (4) is itself mounted on a plate (26) securely connected and removably added to the pedal (2).

4. Device according to Claim 3, characterized in that the plate (26) has a section in the form of an upturned U, the upper part of the U consisting the support plane of the core (4), the downwardly turned arms (27 and 28) of the U being disposed parallel and against the longitudinal elements (27', 28') of the pedal and this plate supporting the core is adjustable with respect to its longitudinal elements, and to this end the arms of the U forming the vertical uprights of the plate are immobilised by a set of bolts (36, 37) on the longitudinal elements of the pedal, the immobilising bolts passing through slots (31, 31', 32, 32') provided on one of the elements to be assembled, thus making it possible to adjust the respective positioning of the plate (26) and the longitudinal elements (27', 28') of the pedal.

5. Device according to Claim 4, characterized in that the core (4) is fixed on the upper part of the plate (26) in the form of an upturned U via a set of bolts (24, 24', 25, 25') passing through, on the one hand, said core, on the other hand said upper part of the plate, through arcuate slots (21'), making it possible to adjust the respective angular positioning of said plate (26) and said core (4).

6. Device according to Claim 1, characterized in that the core (4) is constituted by two superposed pieces, generally cylindrical in form, which are coaxial and of the same diameter, in that the first piece constituting the body (22) of the core comprises recesses (17) regularly distributed on its periphery, in that the second piece (23) for reinforcement, constituted of metal with high mechanical strength such as a steel plate, covers the body of the core and also comprises semi-circular recesses (29) regularly distributed over its periphery, but of smaller surface than those made in the body (22) of the core, these recesses together forming the housings 16, 16', 17, 17' receiving the bolt elements (14, 14', 15, 15') disposed on the bearing (5) receiving the core (4).

7. Device according to Claim 1, characterized in that the inner wall of the body (9) of generally cylindrical form constituting the bearing (5) comprises bolt elements (14, 14', 15, 15') disposed in cruciform manner and formed by radially projecting lugs, adapted to penetrate in the receiver housings (16, 16', 17, 17') made on the periphery of the core (4).

8. Device according to Claim 1, characterized in that the bearing (5) constituted by a substantially cylindrical body (9) is fast with a plate (10) projecting to the outside of the bearing (5), and in that said plate (10) is made fast on the sole (7) of the shoe (1) in the zone surrounding this bearing (5).

9. Device according to Claim 1, characterized in that the receiver bearing (5) is constituted by a cylindrical section (6') surmounting a coaxial trunconic section (6), the trunconic section (6) having its small diameter equal to that of the section of cylinder (6') and its larger diameter located at the base of said bearing (5) thus making it possible to guide the penetration of the core (4) in said bearing (5), the section of cylinder (6') having a diameter allowing engagement (with a slight clearance) of the core (4).

## Patentansprüche

1. Sicherheits-Kupplungsvorrichtung zwischen einem Fahrradpedal (2) und dem von Radfahrer getragenen Schuh (1), bestehend aus zwei in gegenseitigen Eingriff bringbaren Teilen und zwar jeweils einem einfügbaren und einem aufnehmenden Teil, von denen das eine am Pedal (2) und das andere am Schuh (1) befestigt ist, wobei diese zusammenpassenden Teile mit Verriegelungsmitteln versehen sind, die durch einfache Verlagerung des Schuhs bezüglich des Pedals betätigbar sind, dadurch gekennzeichnet, daß das einfügbare Teil in Form eines zylindrischen Kerns (4) ausgebildet und am Pedal (2) angebracht ist und daß das aufnehmende Teil als Lager (5) von zu dem Kern (4) komplementärer Gestalt ausgebildet und in der Dicke der Sohle (7) des Schuhs (1) untergebracht ist.

2. Vorrichtung nach Anspruch 1, dadurch gekennzeichnet, daß das komplementär zum Kern (4) gestaltete und diesen aufnehmende Lager (5) eine Anzahl Riegelorgange (14, 14', 15, 15') aufweist, welche an seiner Innenwand radial vorstehen, wobei die Riegelorgane mit an den Rändern des Kerns (4) angebrachten Aufnahmeräumen (16, 16', 17, 17') zusammenwirken, und es auf an sich bekannte Weise erlauben, die Riegelorgane durch eine Bewegung in Richtung der Achse des zylindrischen Kerns und eine nachfolgende rotierende Verriegelungsbewegung einzufügen (beim Einkuppeln) sowie umgekehrt durch eine rotierende Bewegung gefolgt von einem axialen Ausheben zu entriegeln (beim Entkuppeln).

3. Vorrichtung nach Anspruch 2, dadurch gekennzeichnet, daß der zylindrische Kern (4) auf eine Platte (26) montiert ist, die dem Pedal (2) zugefügt und an diesem unbeweglich befestigt ist.

4. Vorrichtung nach Anspruch 3, dadurch gekennzeichnet, daß die Platte (26) im Querschnitt die Form eines umgekehrten U hat, wobei die obere Fläche des U die Auflageebene des Kerns (4) bildet und die nach unten gerichteten Schenkel (27 und 28) des U zueinander parallel verlaufen und sich gegen die Längsträger (27', 28') des Pedals legen, und daß diese den Kern tragende Platte in der Weise bezüglich der Längsträger verstellbar ist, daß die vertikalen Schenkel der Platte mit Hilfe von Schrauben (36, 37) an den Längsträgern des Pedals befestigt sind, wobei die Befestigungsschrauben an einem der zusammenzufügenden Elemente angeordnete Langlöcher (31', 32') durchsetzen und es auf diese Weise erlauben, die Lage der Platte (26) bezüglich der Längsträger (27', 28') des Pedals zu verändern.

5. Vorrichtung nach Anspruch 4, dadurch gekennzeichnet, daß der Kern (4) auf der Oberseite der umgekehrt U-förmigen Platte (26) mit Hilfe von Schrauben (24, 24', 25, 25') befestigt ist, welche sowohl den Kern als auch den oberen Teil der Platte durchsetzen und dabei durch Bogenschlitze (21') greifen, welch letztere eine Veränderung der Winkelstellung des Kerns (4) bezüglich der Platte (26) ermöglichen.

6. Vorrichtung nach Anspruch 1, dadurch gekennzeichnet, daß der Kern (4) aus zwei aufeinander geschichteten, koaxialen, im wesentlich zylindrischen Teilen gleichen Durchmessers besteht, daß das erste, den Kernkörper (22) bildende Teil regelmäßig über seinen Umfang verteilte Aussparungen (17) aufweist, daß das zweite, sogenannte Verstärkungsteil (23), welches aus Metall hoher mechanischer Festigkeit, insbesondere Stahl, besteht, den Kernkörper bedeckt und halbkreisförmige Aussparungen (29) aufweist, die ebenfalls regelmäßig über seinen Umfang verteilt sind, aber eine kleinere Fläche als die Aussparungen des Kernkörpers (22) haben, wobei diese Aussparungen insgesamt als Aufnahmeräume (16, 16', 17, 17') der Riegelorgane (14, 14', 15, 15') dienen, welche an dem den Kern (4) aufnehmenden Lager (5) angeordnet sind.

7. Vorrichtung nach Anspruch 1, dadurch gekennzeichnet, daß die Innenwand des das Lager (5) bildenden, im wesentlichen zylindrischen Körpers (9) Riegelorgane (14, 14', 15, 15') aufweist, die kreuzförmig angeordnet, als radial abstehende Lappen ausgebildet und dazu geeignet sind, in die am Umfang des Kerns (4) eingeformten Aufnahmeräume (16, 16', 17, 17') einzudringen.

8. Vorrichtung nach Anspruch 1, dadurch gekennzeichnet, daß das aus einem im wesentlichen zylindrischen Körper (9) gebildete Lager (5) mit einer Platte (10) fest verbunden ist, welche das Lager (5) nach außen überragt, und daß diese Platte (10) in der das Lager (5) umgebenden Zone mit der Sohle (7) des Schuhs (1) fest verbunden ist.

9. Vorrichtung nach Anspruch 1, dadurch gekennzeichnet, daß das aufnehmende Lager (5) aus einem kegeligen (6) und einem koaxial darüber angeordneten zylindrischen Abschnitt (6') besteht, wobei der kleinere Durchmesser des kegeligen Abschnitts (6) gleich dem des zylindrischen Abschnitts (6') ist und der größere Durchmesser an der Basis des Lagers (5) liegt, wobei der Kern (4) beim Eindringen in das Lager (5) geführt wird und der zylindrische Abschnitt (6') einen Durchmesser hat, der den Eingriff (mit leichtem Spiel) des Kerns (4) erlaubt.

Fig.1

Fig. 2

Fig. 3

Fig. 5

*Fig. 4*

*Fig. 6*

*Fig. 7*

3